# EUROPÄISCHE PATENTSCHRIFT

(11) **EP 2 099 577 B1**
(45) Veröffentlichungstag und Bekanntmachung des Hinweises auf die Patenterteilung: **27.02.2013**
(21) Anmeldenummer: 07816291.4
(22) Anmeldetag: 03.12.2007
(51) Int. Cl.: B23B 31/00, G01M 1/32

(54) **WERKZEUGKUPPLUNG UND VERFAHREN ZUM AUSWUCHTEN EINER WERKZEUGKUPPLUNG**
TOOL HOLDER AND METHOD OF BALANCING A TOOL HOLDER
PORTE-OUTIL ET PROCÉDÉ POUR ÉQUILIBRER D'UN PORTE-OUTIL

(30) Priorität: 06.12.2006 CH 19792006
(43) Veröffentlichungstag der Anmeldung: 16.09.2009
(60) Teilanmeldung: 13150922.6
(73) Patentinhaber: Rego-Fix AG, 4456 Tenniken (CH)
(72) Erfinder: GERBER, Ernst, 4418 Reigoldswil (CH)
(74) Vertreter: Braun, André jr.
(86) Internationale Anmeldenummer: PCT/CH2007/000608
(87) Internationale Veröffentlichungsnummer: WO 2008/067683

(56) Entgegenhaltungen:
- WO-A-90/11862
- WO-A-95/26258
- WO-A-98/31494
- CH-A5- 695 324
- DE-A1- 19 920 699
- DE-U1- 29 809 653
- JP-A- 8 118 177
- 'Stirnfläche', [Online] Wikipedia, der freien Enzyklopädie Gefunden im Internet: <URL:http://de.wikipedia.org/wiki/Stirnfläc he> [gefunden am 2012-04-26]

## Beschreibung

Die Erfindung betrifft ein Verfahren zum Auswuchten einer Werkzeugkupplung gemäß dem Oberbegriff des Anspruchs 1 und eine Werkzeugkupplung gemäß dem Oberbegriff des Anspruchs 2. Ein solches Verfahren sowie eine solche Werkzeugkupplung sind in der WO 98/31494 offenbart.

Durch den Einsatz von zunehmend leistungsfähigeren Schneidstoffen werden bei Werkzeugmaschinen immer höhere Drehzahlen, derzeit schon 50 000 U/min und mehr, möglich. Mit höheren Drehzahlen nehmen die negativen Auswirkungen von Unwucht zu. Solche Auswirkungen sind Verkürzung der Lebensdauer der Lager der Maschinenspindeln durch ungleichmässige Belastung, verminderte Oberflächengüte des bearbeiteten Werkstückes und verkürzte Standzeit der Schneidwerkzeuge.

Dieses Problem und Massnahmen zu seiner Behebung sind seit langem bekannt. So ist beispielsweise üblich, zum Kompensieren der Unwucht Bohrungen an der Aussenseite der Werkzeugkupplung anzubringen. In WO 98/31494 ist ein Werkzeugträger beschrieben, bei dem Ausgleichsbohrungen in einer im Inneren der Kupplung angeordneten radialen Fläche angebracht sind.

Eine andere Lösung besteht in der Verwendung von Exzenterscheiben oder Ausgleichsringen, wie z.B. in DE 298 09 653 U1 oder WO 90/11862 gezeigt.

Wenn eine Massnahme zum Unwuchtausgleich (Materialabtrag, Einsetzen von anderen Materialien) in einer axialen Distanz von der Stelle getroffen wird, welche die Unwucht verursacht, so ist die Unwucht zwar statisch ausgeglichen, aber die von der Drehzahl abhängige dynamische Unwucht nimmt bei steigenden Drehzahlen zu. Neuere bekannte Massnahmen zum Unwuchtausgleich sehen deshalb einen Materialabtrag in oder nahe der Ebene vor, in welcher die Unwucht auftritt, um auch die dynamische Unwucht auszugleichen.

Es hat sich aber nun herausgestellt, dass auch diese Massnahme nicht genügt, um die dynamische Unwucht bei sehr hohen Drehzahlen wirksam auszuschalten. Der Erfindung liegt deshalb die Aufgabe zugrunde, die Unwuchtkompensation bei Werkzeugkupplungen weiter zu verbessern.

Erfindungsgemäss wird dies durch die Merkmale der unabhängigen Ansprüche 1 und 2 erreicht.

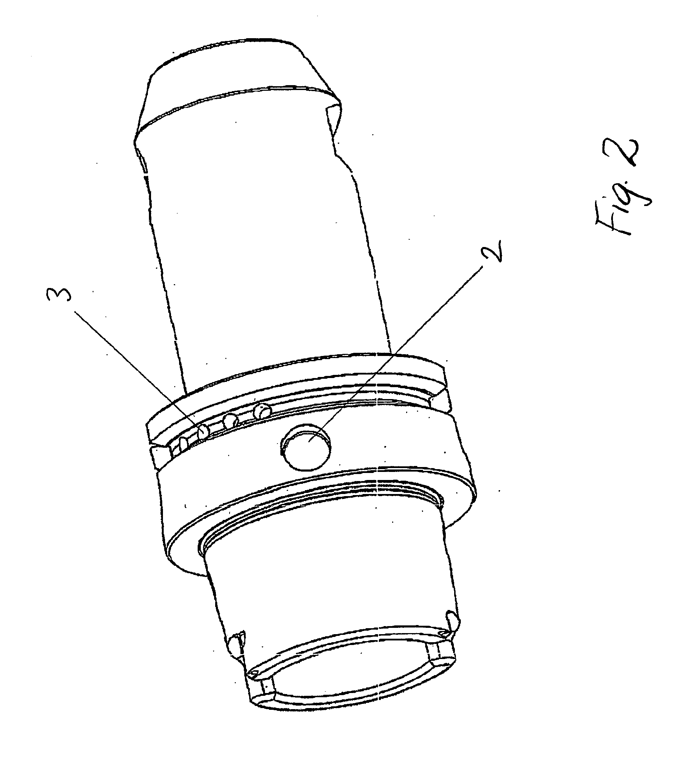

Im Folgenden werden anhand der beiliegenden Zeichnungen bevorzugte Ausführungsbeispiele der Erfindung beschrieben. Es zeigen
- Fig. 1 und 2: perspektivische Darstellungen von Hohlschaftkegel(HSK)-Werkzeugkupplungen gemäss dem Stand der Technik
- Fig. 3 - 8: verschiedene Ausführungsformen von Hohlschaftkegeln von Werkzeugkupplungen nach der Erfindung

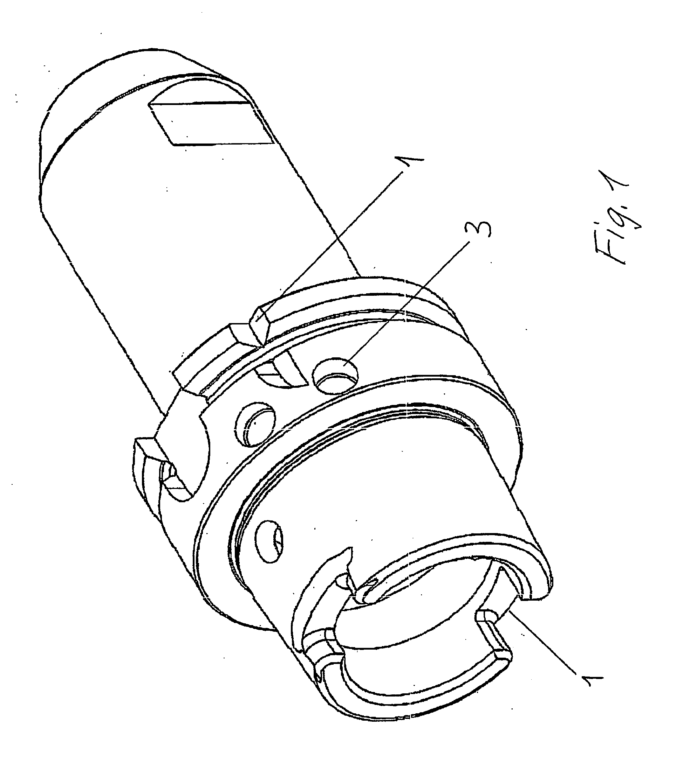

Die in Fig. 1 gezeigte Hohlschaftkegel(HSK)-Werkzeugkupplung weist die bekannten Ausnehmungen, d.h. Ausfräsungen 1, Bohrungen 2 etc. auf, die beispielsweise beim automatischen Werkzeugwechsel für das Greifen, die Positionierung etc. erforderlich sind. Diese Ausnehmungen sind in der Regel auf gegenüberliegenden Seiten unterschiedlich dimensioniert und erzeugen daher Unwucht. Zur Kompensation dieser Unwucht ist es üblich, möglichst in der Nähe des Unwuchterzeugers einen Materialabtrag, meistens in Form von Bohrungen 3, vorzunehmen.

Durch diese Art der Unwuchtkompensation wird zwar die statische Unwucht kompensiert, nicht aber die dynamische Unwucht, die bei höheren Drehzahlen zu einer Taumelbewegung der Werkzeugkupplung führt.

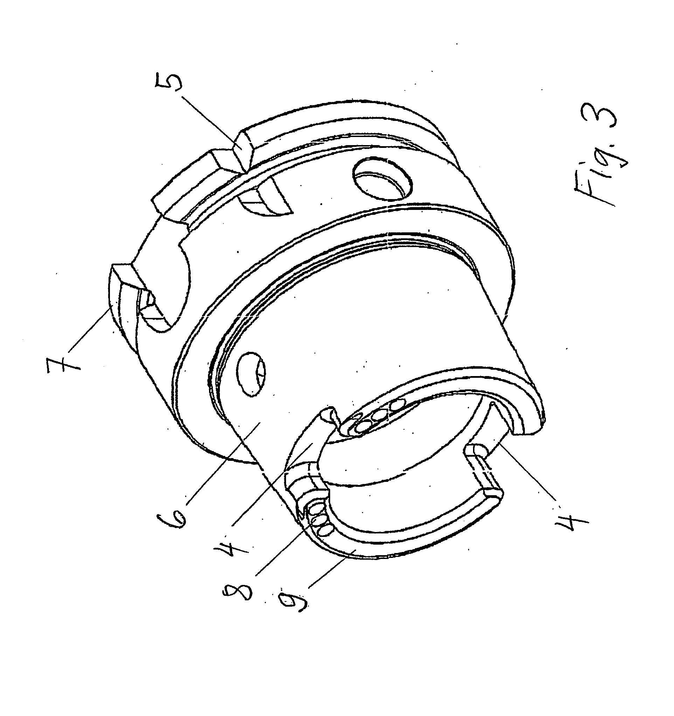

Bei den in den Fig. 3-8 dargestellten Hohlschaftkegeln sind die häufigsten Verursacher der Unwucht gezeigt, nämlich die beiden einander gegenüberliegenden Ausnehmungen 4 in der maschinenseitigen Endfläche 9 der Werkzeugkupplung für die Verbindung mit der Maschinenspindel und die Übertragung des Antriebsdrehmoments, sowie Positionierungsnuten 5 und eine an der gegenüberliegenden Seite angebrachte, d.h. in der Figur nicht sichtbare Bohrung für einen Chip (elektronische Datenerfassung) in dem an die Kegelfläche 6 anschliessenden Flansch 7.

Bei der in Fig. 3 gezeigten Version ist die stirnseitige Unwucht infolge der Ausnehmungen 4 durch Bohrungen 8 in der maschinenseitigen Endfläche 9 der Werkzeugkupplung, d.h. also in der axialen Ebene der Unwuchterzeugung kompensiert. Die beim Flansch 7 befindlichen Ausnehmungen werden ebenfalls in derselben axialen Ebene der Unwuchterzeugung, d.h. durch Bohrungen kompensiert.

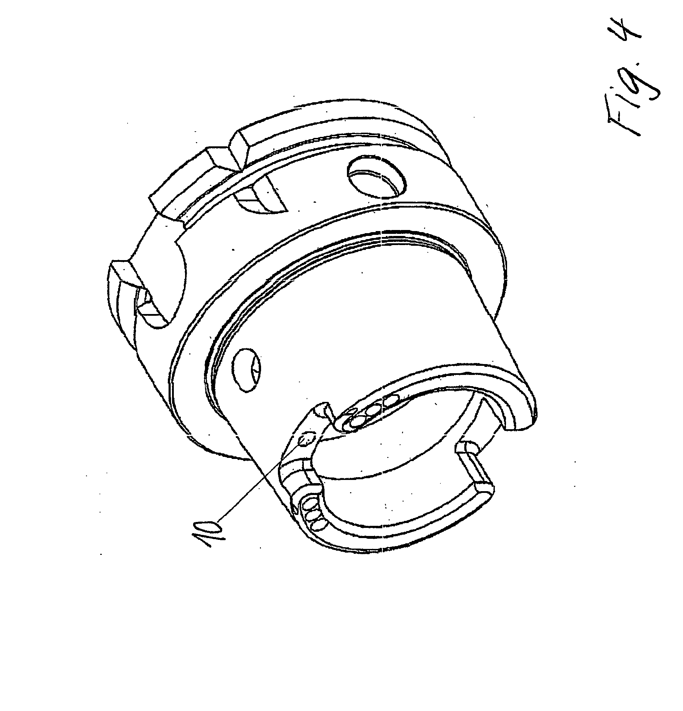

Bei der in Fig. 4 gezeigten Version sind zusätzliche Kompensationsbohrungen 10 in den Ausnehmungen 4 selbst angeordnet.

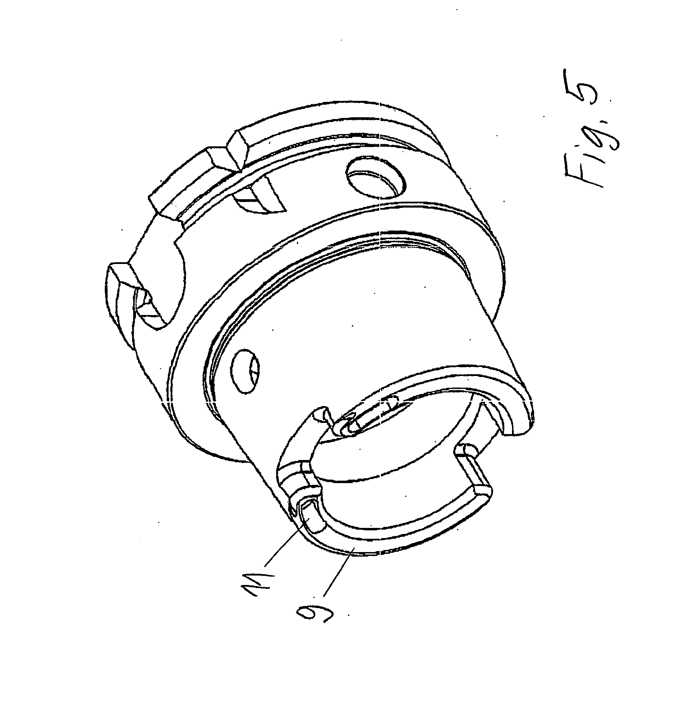

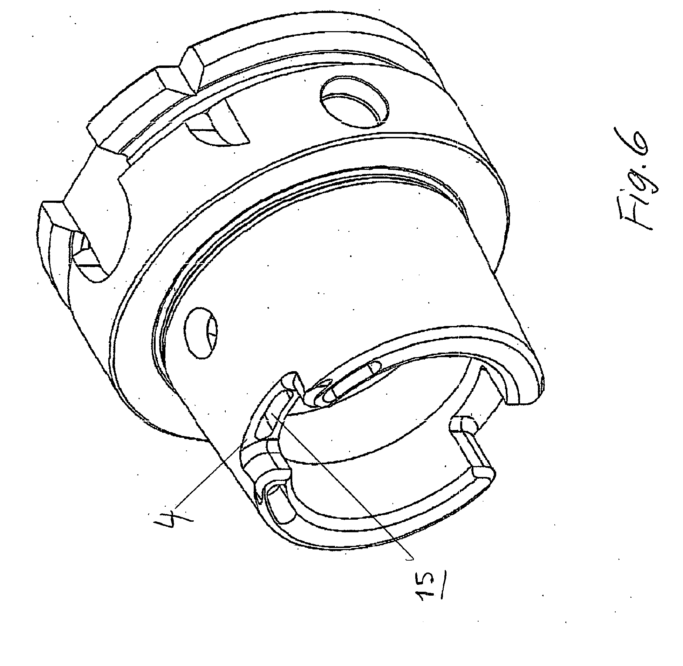

Bei der in Fig. 5 gezeigten Ausführungsform sind anstelle von Bohrungen Langlöcher 11 in der maschinenseitigen Endfläche 9 ängeordnet. Fig. 6 zeigt die Anordnung von zusätzlichen Langlöchern 15 in den Ausnehmungen 4 selbst.

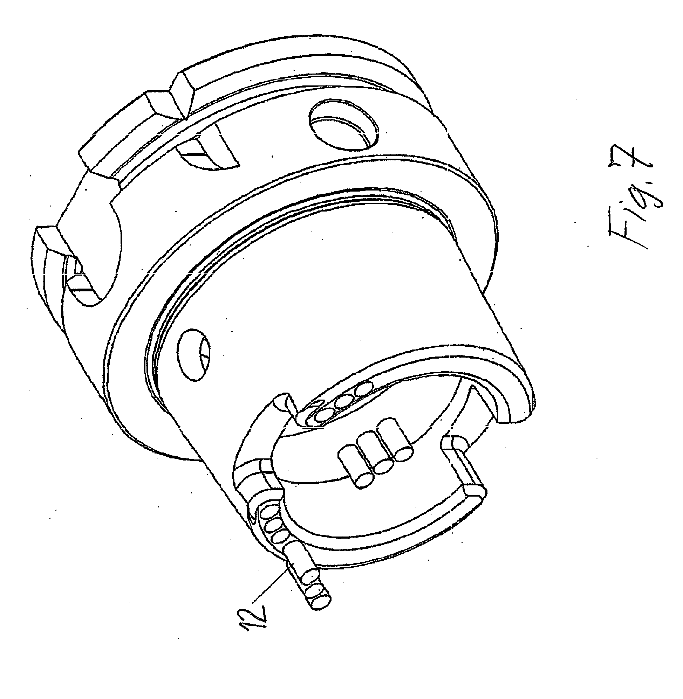

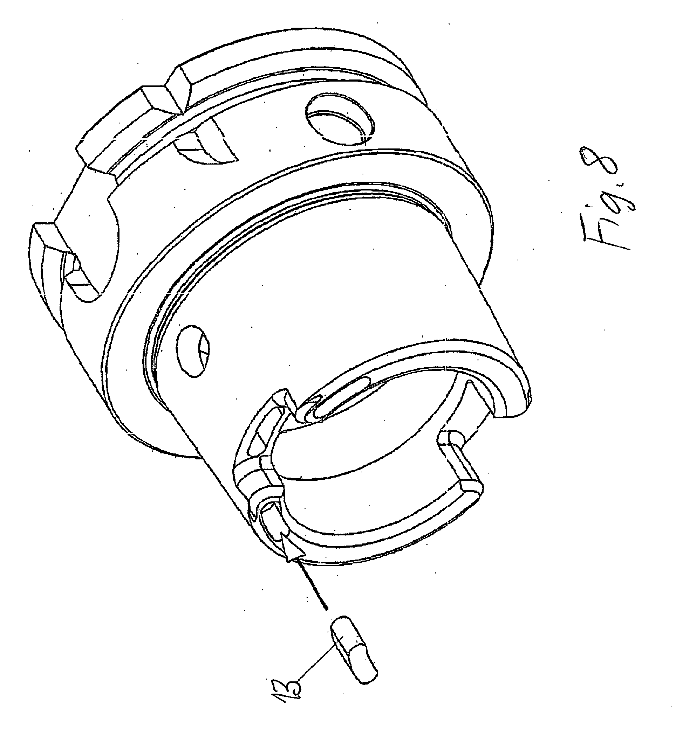

Wie in Fig. 7 dargestellt, können die Bohrungen 8 mit zylindrischen Einsätzen 12 verschlossen werden. Dies verhindert das Eindringen von Schmutz und ermöglicht ein Abtasten de r mit Kompensationsbohrungen versehenen Flächen für Messzwecke. Um den Kompensationseffekt zu erzielen, bestehen die Einsätze 12 aus einem leichteren Material, beispielsweise aus Kunststoffen, Leichtmetallen oder Hohlkörpern. Fig. 8 zeigt, wie zur Kompensation eingebrachte Langlöcher 11 mit entsprechend geformten Einsätzen 13 verschlossen werden.

Die erfindungsgemässe Unwuchtkompensation wurde anhand einer HSK-Werkzeugkupplung dargestellt, aber ihr Prinzip ist selbstverständlich ohne weiteres auch bei anderen Arten von Werkzeugkupplungen einsetzbar.

## Patentansprüche

1. Verfahren zum Auswuchten einer Werkzeugkupplung mit einer Achse, einer zur Achse senkrechten maschinenseitigen Endfläche (9), sowie in der Endfläche angeordneten, einander gegenüberliegenden Antriebsausnehmungen (4) für die Verbindung mit einer Antriebsspindel, bei der in zwei axial voneinander beabstandeten Ebenen Massnahmen zum Ausgleich einer Unwucht vorgenommen werden, deren eine darin besteht, dass in einer ersten Ebene Ausgleichsringe angeordnet sind, **dadurch gekennzeichnet, dass** die in der von der ersten axial beabstandeten zweiten Ebene getroffene Massnahme darin besteht, dass in der maschinenseitigen Endfläche (9) der Werkzeugkupplung zusätzlich zu den Antriebsausnehmungen (4) ein Materialabtrag (8, 11) erfolgt.

2. Werkzeugkupplung mit einer Achse, einer zur Achse senkrechten maschinenseitigen Endfläche (9), in der Endfläche angeordneten, einander gegenüberliegenden Antriebsausnehmungen (4) für die Verbindung mit einer Antriebsspindel, sowie in einer Ebene angeordnete Ausnehmungen zur Kompensation von Unwucht, **dadurch gekennzeichnet, dass** Ausgleichsringe in einer von der Ebene der Ausnehmungen axial beabstandeten Ebene angeordnet sind und dass die Ausnehmungen (8, 11) zur Kompensation von Unwucht in der zur Achse senkrechten, maschinenseitigen Endfläche (9) angeordnet sind.

## Claims

1. A method for balancing a tool coupling comprising an axis, an end face (9) perpendicular to said axis and facing toward the machine, and drive recesses (4) which oppose each other and are arranged in the end face and serve for connecting to a drive spindle, wherein measures for compensating imbalance are carried out in two planes axially spaced apart from each other, one of said measures being that compensation rings are arranged in a first plane, **characterized in that** the measure taken in the second plane which is axially spaced apart from the first plane is that in the end face (9) of the tool coupling, which end face faces toward the machine, a material removal (8, 11) takes place in addition to the drive recesses (4).

2. A tool coupling comprising an axis, an end face (9) perpendicular to said axis and facing toward the machine, drive recesses (4) which oppose each other and are arranged in the end face and serve for connecting to a drive spindle, and recesses which are arranged in one plane and serve for compensating imbalance, **characterized in that** compensation rings are arranged in a plane axially spaced apart from the plane of the recesses and that the recesses (8, 11) for compensating imbalance are arranged in the end face (9) which is perpendicular to the axis and faces toward machine.

## Revendications

1. Procédé d'équilibrage d'un accouplement pour outil comportant un axe, une surface d'extrémité (9) située du côté de la machine et perpendiculaire à l'axe, ainsi que des décrochements d'entraînement (4), ménagés dans la surface d'extrémité et opposés l'un à l'autre, destinés à établir la liaison avec une broche d'entraînement, dans lequel il est prévu dans deux plans écartés l'un de l'autre dans la direction axiale des mesures de compensation d'un balourd dont l'une consiste à placer des anneaux d'équilibrage dans un premier plan, **caractérisé par le fait que** la mesure prise dans le deuxième plan écarté du premier dans la direction axiale consiste à réaliser un enlèvement de matière (8, 11) dans la surface d'extrémité (9) de l'accouplement pour outil, côté machine, en plus des décrochements d'entraînement (4).

2. Accouplement pour outil comportant un axe, une surface d'extrémité (9) située du côté de la machine et perpendiculaire à l'axe, des décrochements d'entraînement (4), ménagés dans la surface d'extrémité et opposés l'un à l'autre, destinés à établir la liaison avec une broche d'entraînement, ainsi que des décrochements disposés dans un plan et destinés à compenser le balourd, **caractérisé par le fait que** des anneaux d'équilibrage sont disposés dans un plan qui est écarté dans la direction axiale par rapport au plan des décrochements, et **par le fait que** des décrochements (8, 11) de compensation du balourd sont disposés dans la surface d'extrémité (9) située du côté de la machine et perpendiculaire à l'axe.
